(19) Europäisches Patentamt
European Patent Office
Office européen des brevets

(11) **EP 3 595 362 B1**

(12) **EUROPEAN PATENT SPECIFICATION**

(45) Date of publication and mention
of the grant of the patent:
**10.03.2021 Bulletin 2021/10**

(51) Int Cl.:
***H04W 40/22*** *(2009.01)*      ***H04W 84/12*** *(2009.01)*

(21) Application number: **18183475.5**

(22) Date of filing: **13.07.2018**

(54) **OPTIMIZING A WI-FI NETWORK COMPRISING MULTIPLE RANGE EXTENDERS AND ASSOCIATED DEVICES**

OPTIMIERUNG EINES WI-FI-NETZWERKS MIT MEHREREN RANGE-EXTENDERN UND ZUGEHÖRIGE VORRICHTUNGEN

OPTIMISATION D'UN RÉSEAU WI-FI COMPRENANT DE MULTIPLES PROLONGATEURS D'AUTONOMIE ET DISPOSITIFS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.01.2020 Bulletin 2020/03**

(73) Proprietor: **Nokia Solutions and Networks Oy 02610 Espoo (FI)**

(72) Inventors:
• **LEUKE BANDARA KARUNARATNE, Samurdhi 2018 Antwerpen (BE)**
• **GACANIN, Haris 2018 Antwerpen (BE)**

(74) Representative: **IP HILLS NV Hubert Frère-Orbanlaan 329 9000 Gent (BE)**

(56) References cited:
**US-A1- 2016 088 521      US-A1- 2018 102 961 US-B1- 9 258 765**

**Description**

**Technical Field**

Various example embodiments relate to the optimization of a wireless network comprising multiple range extenders and multiple associated devices.

**Background**

As the demand for wireless networks, Wi-Fi, availability grows, wireless networks are gaining momentum as a solution for coverage and congestion issues. A Wi-Fi network usually comprises an access point, AP, multiple range extenders, EXTs, and multiple associated devices, STAs.
When in such a Wi-Fi network STAs communicate with an AP, data-packets are either directly exchanged with the AP, either routed over one or more EXTs, thereby following routing paths to exchange the data-packets. A routing path is thus regarded as either a direct link between a STA and the AP, either a link between a STA and the AP over one or more EXTs.
US 2018/0102961 A1 discloses methods and apparatuses for changing topology of a wireless network in a multi-band wireless networking system in which, at boot up, a wireless network device configures the wireless network with a certain topology. After the topology is initially configured, the wireless network device determines a network-related parameter and changes the topology of the wireless network based on the network-related parameter.
US 2016/0088521 A1 discloses a load balancing technique for a wireless network with multiple access points, APs. To load balance the traffic, an AP determines candidate paths between the AP and a client device, wherein at least one of the candidate paths traverses another AP. Further, the AP determines the available bandwidths of the candidate paths based, at least in part, on the availability of communication channels of the candidate paths, and, steers a portion of the traffic of the client device to a candidate path based, at least in part, on the available bandwidth.

**Summary**

The routing paths for exchanging data-packets between the EXTs and the AP are determined by a scheme based on the presence of interference rates and allocated channels. Therefore, a multitude of routing paths over different EXTs for different STAs arise resulting in a reduced operability of the Wi-Fi network.
Amongst others, it is an object to provide a solution that improves the routing of data-packets between an AP and STAs over intermediate EXTs in a Wi-Fi network.
This object is achieved, according to a first example aspect of the present disclosure, by a network controller comprising means for performing monitoring routing paths wherein data-packets are exchanged between an AP and respective STAs in a Wi-Fi network comprising at least one EXT; and classifying the STAs as a delay-sensitive associated device, DSC, or a throughput-sensitive associated device, TSC; and calculating an average delay between the DSCs and the AP, and an average throughput between the TSCs and the AP; and weighting the average delay with the average throughput, thereby obtaining a performance coefficient; and optimizing the performance coefficient by altering the routing paths.
Thus, the AP is connected to a gateway thereby connecting the Wi-Fi network with another network like, for example, the Internet. The STAs in the Wi-Fi network exchange data-packets with the AP to get access to this network. Hereto, a STA may either exchange data-packets directly with the AP, or through one or more EXTs. The path through which data-packets are routed to exchange data-packets, is the routing path for the respective STA, and the network controller comprises means to monitor the routing paths.
The STAs present in the Wi-Fi network may run a variety of applications which have different demands regarding the way data-packets are exchanged. An application may, for example, demand a high-throughput, for example 4K video streaming, while another application may demand a low delay, like for example VoIP calls. The network controller further comprises means to classify the STAs. A STA running an application demanding a low delay is classified as a DSC, and a STA running an application demanding a high-throughput is classified as a TSC.
Next, the network controller calculates for a respective DSC a delay between the DSC and the AP, that is, a time needed to exchange data-packets between the DSC and the AP through the respective routing path. For each DSC in the Wi-Fi network a respective delay is calculated, and next by calculating a delay for each DSC in the network, an average delay between the DSCs and the AP is calculated. Furthermore, the network controller calculates for a respective TSC a throughput between the TSC and the AP, that is, the available throughput through the respective routing path for exchanging data-packets. For each TSC the available throughput is calculated, and next, an average throughput between the TSCs and the AP is calculated.
Subsequently, the network controller weights the calculated average delay for the DSCs with the calculated average throughput for the TSCs. The weighting is, for example, performed by determining a weighted sum of the average delay with the average throughput via a weighting factor and/or a normalization factor, or performed by determining a weighted multiplication between the average delay and the average throughput via a weighting factor and/or normalization factor. As a result of the weighting, a performance coefficient is obtained indicative for the performance of the Wi-Fi network regarding the delay for the DSCs, and regarding the throughput for the TSCs.

Finally, the network controller optimizes the performance coefficient by altering the routing paths, this is the routing paths are adapted such that the performance coefficient is, for example, maximized when it corresponds to a weighted sum of the average delay with the average throughput. Alternatively, the performance coefficient may be minimized when, for example, a weighted multiplication is calculated by a fraction and depending on which parameter is used as a denominator. The optimization may, for example, be performed by increasing the throughput for the TSCs, while simultaneously, it is avoided that the delay for the DSCs is not significantly increased as well. Alternatively, the optimization may also be performed by reducing the delay for the DSCs, while simultaneously it is avoided that there is a negative effect on the throughput for the TSCs.

Since a STA may run applications that are delay-sensitive, or running applications that are throughput sensitive, it is an advantage that the network controller may, firstly, classify the STAs based on their demand regarding the exchange of data-packets, thus as delay-sensitive versus as throughput-sensitive, and that next, the network controller optimizes the Wi-Fi network by taking into account both demands. Advantageously, such an optimization scheme is more beneficial, since, when only focussing on increasing a throughput, a delay will be negatively increased as well, and reversely, when solely focussing on reducing a delay, a throughput will be reduced likewise, while by taking into account both demands, the optimization scheme enhances the average throughput for the TSCs and reduces the average delay for the DSCs. Furthermore, no modifications of the STAs is required and the optimization may readily be deployed in the Wi-Fi network.

According to example embodiments, the altering further comprises reassociating the STAs to an EXT or to the AP.

The STAs are each initially connected and associated directly to the AP, or to a respective EXT in the Wi-Fi network. Next, according to an example embodiment, to optimize the performance coefficient by altering the routing paths, the network controller may reassociate a STA with another EXT than the STA with which it was initially connected to. Reassociating thus means that the STA is disconnected from its initial EXT, or from the AP, and subsequently associated to another EXT, or to the AP. This way, the routing paths alter, and, advantageously, the network controller optimizes the Wi-Fi network by balancing the throughput for the TSCs and the delay for the DSCs.

According to example embodiments, the altering further comprises rerouting the routing paths.

Thus, alternatively, the network controller may change the paths through which data-packets are exchanged. Differently formulated, a STA stays connected with the EXT or AP with which it is initially connected to, and the network controller changes the EXTs in the routing path, such that a different routing path is used to route data-packets from the STA to the AP and vice versa. The rerouting of the routing paths may further be combined with the reassociating of the STAs. Advantageously, by combining a routing and reassociation optimization scheme, the network controller may optimize the Wi-Fi network in an efficient manner.

According to further example embodiments, the weighting further comprises giving priority to the DSCs or to the TSCs.

This is, besides optimizing the Wi-Fi network by balancing the delay for the DSCs and the throughput for the TSCs, a priority may also be given to either the DSCs, either the TSCs. This way, the Wi-Fi network may be set up such that a demand of one type is given preference, while at the same time the functioning of the other type is not neglected.

Additionally, the means of the network controller are further configured to perform selecting an EXT or the AP when an additional STA requests admittance to the Wi-Fi network; and admitting the additional STA to the Wi-Fi network through the selected EXT or the AP when the selected EXT or the AP results in a routing path optimizing the performance coefficient.

Thus, in the Wi-Fi network besides the STAs that are already connected and associated to either an EXT or to the AP, an additional STA may request access to the Wi-Fi network. Hereto, prior to a connection and association to an EXT or to the AP, the network controller selects an EXT or the AP and determines if, when the selected EXT or the AP is used to associate the additional STA to the Wi-Fi network, this association will result in a routing path optimizing the performance coefficient. Advantageously, the additional STA is not associated randomly, such that it is avoided that the additional STA would adversely affect the operation of the Wi-Fi network. Furthermore, the STA may also be classified as a DSC or a TSC prior to an association, such that the network controller may, firstly, immediately connect the additional STA to a proper EXT or to the AP, and, secondly, maintain an optimal operation of the Wi-Fi network.

According to further example embodiments, the optimizing further comprises optimizing the Wi-Fi network by performing an advised reinforcement learning algorithm.

Advantageously, an advised reinforcement learning algorithm may be used to derive a success rate when changing a state by an action, thus for example after the optimizing, without having a mathematical model of the environment. The success rate is derived by the algorithm based on a cumulative reward, and thus, may easily be used to optimize the Wi-Fi network, meaning that the success rate is derived without having an in-depth knowledge of the Wi-Fi network.

According to an example embodiment, the performing of the advised reinforcement learning algorithm comprises performing a Q-learning algorithm performing determining for a STA candidate EXTs for associating the STA to the Wi-Fi network; and determining a reward when the STA would be reassociated to one of the candidate EXTs or the AP, and a Q-value of the learning algorithm associated with the reward; and when the STA is reassociated updating the q-value based on the reward.

A Q-learning algorithm links an action to a state in, for example, a Q-table. A current state is, for example, the way data-packets are routed currently, and an action is, for example, reassociating STAs and/or rerouting routing paths. An action alters the current state into a next state. The states and the actions are then linked to each other by examining the effect of an action on a state. Next, executing an action to a state provides a reward indicative for a success of the action, thus how well the performance coefficient is optimized.

An action is thus determining for a STA candidate EXTs for associating the STA to the Wi-Fi network, and when the action would be performed, thus when a state would be changed, a reward is determined when the action would take place. Next, when the STA is reassociated the Q-table is updated.

According to an example embodiment, the means of the network controller comprises at least one processor; and at least one memory including computer program code, the at least one memory and computer program code configured to, with the at least one processor, cause the performance of the networking device.

According to a second example aspect, a method is disclosed comprising monitoring routing paths wherein data-packets are exchanged between an AP and respective STAs in a Wi-Fi network comprising at least one EXT; and classifying the as a delay-sensitive associated device, DSC, or a throughput-sensitive associated device, TSC; and calculating an average delay between the DSCs and the AP, and an average throughput between the TSCs and the AP; and weighting the average delay with the average throughput, thereby obtaining a performance coefficient; and optimizing the performance coefficient by altering the routing paths.

According to example embodiments, the altering further comprises reassociating the STAs to an EXT or to the AP, and/or rerouting the routing paths.

According to a third example aspect, a computer readable storage medium is disclosed comprising computer-executable instructions for performing the following steps when the program is run on a computer monitoring routing paths wherein data-packets are exchanged between an AP and respective STAs in a Wi-Fi network comprising at least one EXT; and classifying the STA as a delay-sensitive associated device, DSC, or a throughput-sensitive associated device, TSC; and calculating an average delay between the DSCs and the AP, and an average throughput between the TSCs and the AP; and weighting the average delay with the average throughput, thereby obtaining a performance coefficient; and optimizing the performance coefficient by altering the routing paths.

## Brief Description of the Drawings

Some example embodiments will now be described with reference to the accompanying drawings.

Fig. 1 illustrates an example embodiment of a Wi-Fi network; and

Fig. 2 illustrates another example embodiment of a Wi-Fi network; and

Fig. 3 illustrates an example embodiment of a network controller for optimizing a performance coefficient; and

Fig. 4 illustrates example procedures for optimizing a performance coefficient; and

Fig. 5 illustrates an example embodiment of an internal structure of a procedure; and

Fig. 6 illustrates an example embodiment of a decision flow of a learning policy; and

Fig. 7 illustrates an example embodiment of a decision flow for a procedure of admittance of new users; and

Fig. 8 illustrates an example embodiment of a decision flow of a self-optimization procedure; and

Fig. 9 illustrates an example embodiment of a computing system for performing steps to optimize a performance coefficient.

**Detailed Description of Embodiment(s)**

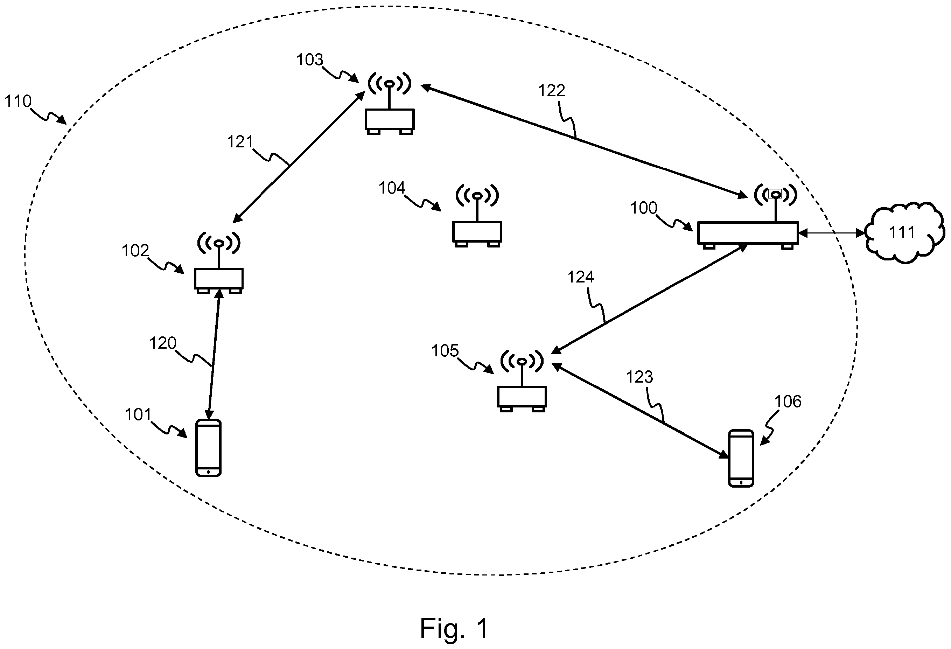

Fig. 1 illustrates an example embodiment of a Wi-Fi network 110 comprising an access point, AP, 100, a multitude of range extenders, EXTs, 102-105, and associated devices, STAs, 101 and 106. The AP 100 communicates with an external network 111, such as, for example, the Internet. In the example embodiment of Fig. 1, the STA 101 communicates with the AP 100 through EXT 102 and 103, via routing paths 120-122. The STA 106 communicates with AP 100 through routing paths 123-124.

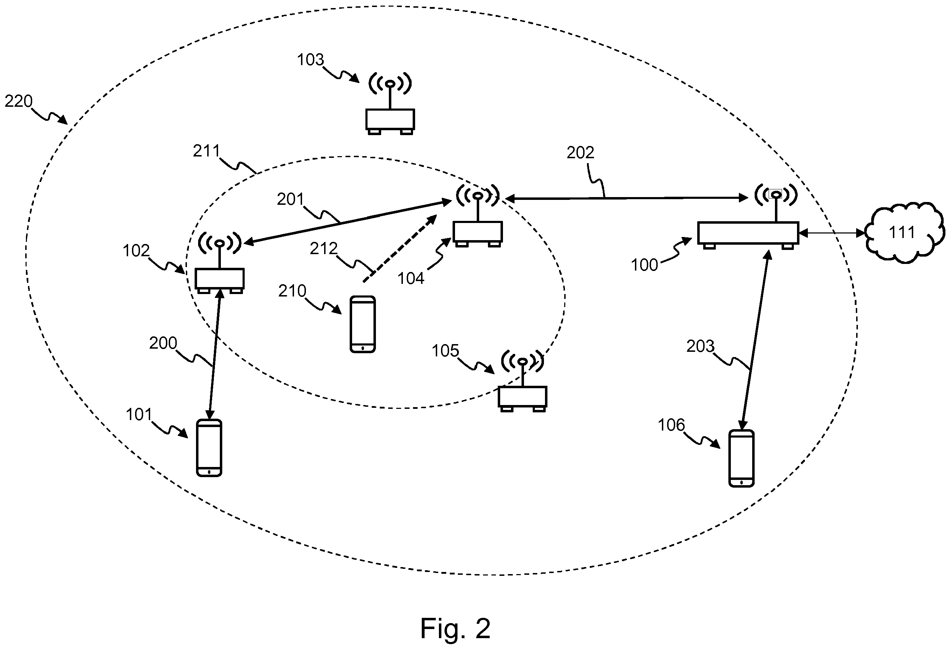

In Fig. 2 illustrates another example embodiment of the Wi-Fi network 220. The Wi-Fi network comprises likewise the AP 100, the EXTs 102-105, and STAs 101 and 106, yet in contrast to the Wi-Fi network 110 as illustrated in Fig. 1, the STA 101 is connected to the AP 100 through routing paths 200-202, and STA 106 is directly connected to the AP 100 through routing path 203. Furthermore, STA 210 is an additional STA that requests admittance to the Wi-Fi network 220.

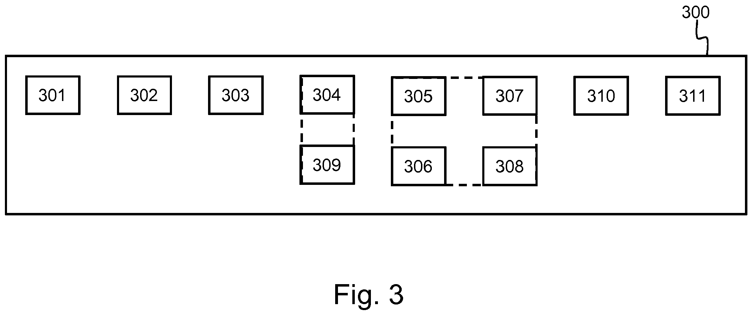

Fig. 3 illustrates an example embodiment of a network controller 300 for optimizing a performance coefficient. The network controller 300 comprises means for monitoring 301 routing paths, means for classifying 302 STAs as a delay-sensitive associated device, DSC, or a throughput-sensitive associated device, TSC, means for calculating 303 an average delay between the DSCs and the AP 100, and an average throughput between the TSCs and the AP 100, means for weighting 304 the average delay with the average throughput, means for optimizing 305 the performance coefficient by altering 306 the routing paths 120-122, 123-124, 200-202, 203, means for reassociating 307 the STAs 101, 106, means for rerouting 308 the routing paths 120-122, 123-124, 200-202, 203, means for giving priority 309 to the DSCs, or to the TSCs, means for selecting 310 an EXT 102-105 or the AP 100 when an additional STA 210 request admittance to the Wi-Fi network, and means for admitting 311 the additional STA 210 to the Wi-Fi network.

In the example embodiments of Fig. 1 and Fig 2, STA 101 is regarded as a DSC, and STA 106 is regarded as a TSC. A DSC is, for example, a STA that is running an VOIP application, while a TSC is, for example, a STA that is running a 4K video streaming application. The Wi-Fi network 110 is optimized by the network controller 300 by altering the routing paths 120-122 and 123-124 to the routing paths 200-202 and 203 as illustrated by Wi-Fi network 110.

By altering 306 the routing paths, the network controller 300 optimizes 305 a performance coefficient, wherein the performance coefficient is calculated by weighting 304 an average delay between the DSC 101 and the AP 100, and an average throughput between the TSC 106 and the AP 100. The performance coefficient, presented as $\hat{\mathcal{O}}$, may thus be determined by the following expression:

$$\hat{\mathcal{O}} = \alpha \cdot \left| \begin{matrix} \text{Average throughput} \\ \text{of TSC} \end{matrix} \right| + (1-\alpha) \cdot \left| \begin{matrix} \text{Average delay} \\ \text{of DSC} \end{matrix} \right| \qquad (1)$$

wherein $\alpha$ determines a relative priority giving to the TSC 106 versus the DSC 101.

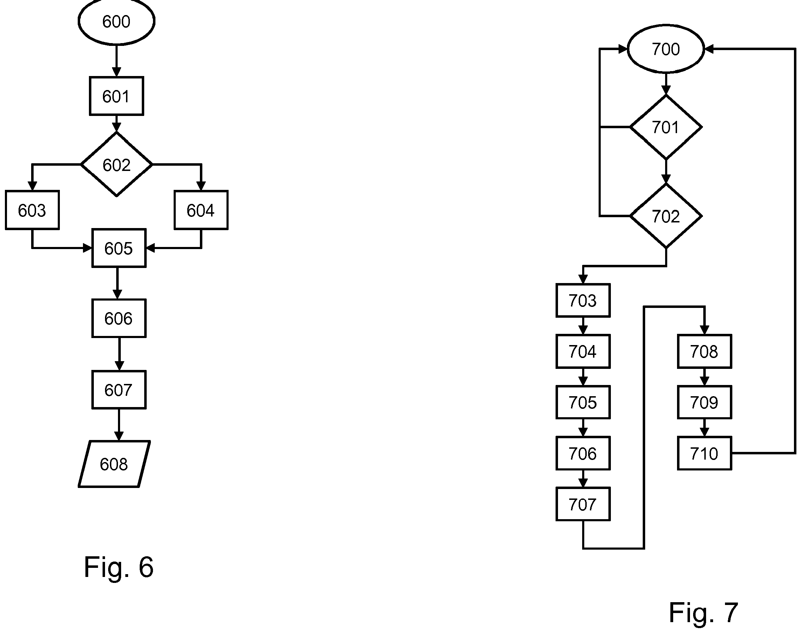

To optimizes 305 the performance coefficient $\hat{\mathcal{O}}$, the routing paths are altered 306, by either rerouting 306 the paths, by reassociating 307 STAs, and/or a combination thereof. The optimization may be performed by an advised reinforcement learning agent, A-RLA, from which steps are illustrated by Fig. 6.

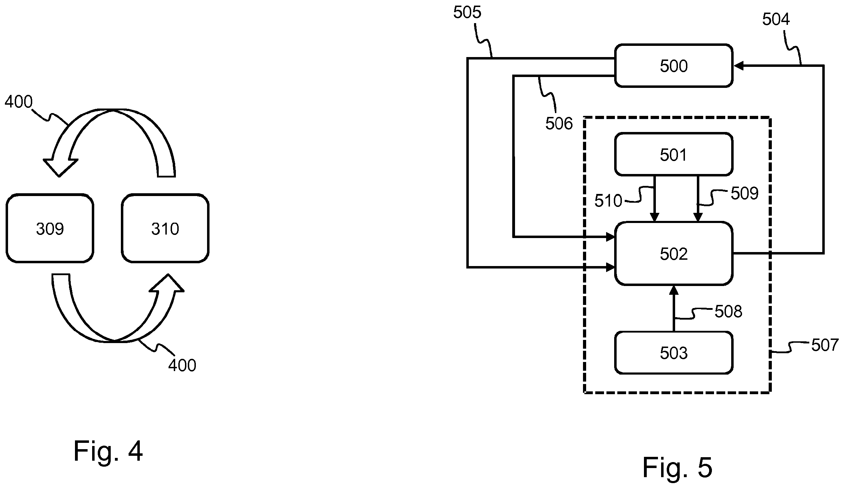

In Fig. 5 the A-RLA 507 is schematically represented. The A-RLA 507 observes states in the environment 500 and makes decisions based on the states with the objective of maximizing the performance coefficient $\hat{\mathcal{O}}$. To make these decisions, the A-RLA 507 uses a combination of learned knowledge 501 as an input 510 of a learning policy 502, which on its behalf returns output 509 to the learned knowledge 501. The learning policy 502 thus uses learned knowledge 501, and further receives input 508 from an analytically derived intelligence 503 from the current network information.

Each decision made is followed by an action 504 that attempts to increase $\hat{\mathcal{O}}$. The A-RLA 507 gathers the network's response to this action 504 in the form of a reward 506 which signifies the positive or negative effect it had in terms of maximizing $\hat{\mathcal{O}}$. Actions and rewards are thus coupled, since each action 504 is followed by a corresponding reward 506, which also correspond to a state 505 of the environment 500. Next, the A-RLA 507 records the states 505 and rewards 506 in its knowledge base to aid in making better decisions in the future.

The goal of the learning policy 502 used to find a balance between the previous knowledge and current analytical estimates, is to find a best action (*a*\*) to execute to maximize $\hat{\mathcal{O}}$.

First, in an initializing step 600, a state-dependent exploration probability $\varepsilon$ is initialized such that $\varepsilon(s) = 1$. From each action $a$ that could be taken from state $s$, a corresponding Q-value is initialized to zero, $Q(s, a) = 0$, wherein the higher the Q-value, the higher the effect that an action has had previously to maximize $\hat{\mathcal{O}}$.

In a second step 601, variable $\xi$ is set to a uniform random real number over the interval [0,1].

Next, in a third step 602, it is monitored whether $\xi \leq \varepsilon(s)$. If this is the case, the next step is 603, otherwise the next step is 604.

In step 603, a best action is selected by exploring

$$a^* = \arg\max_a \Pr(s, a) \tag{2}$$

wherein

$$\Pr(s, a) = \frac{e^{\frac{Q(s,a)}{T}}}{\sum_{b \in A} e^{\frac{Q(s,b)}{T}}} \tag{3}$$

That is, a best action is the one that has the maximum probability given by $\Pr(s, a)$, wherein $A(s)$ is the set of actions of an EXT relevant to its current state $s$.

In step 604 the best action is selected by exploiting previous knowledge by

$$a^* = \arg\max_{a \in A} \{Q(s, a) + \Phi(s, a)\} \tag{4}$$

wherein $\Phi(s, a)$ is an advice function. By defining

$$\Phi = \mathcal{O},$$

$\Phi$ always takes the values of the estimated objective function, i.e. $\Phi$ is what controls an influence of an analytically derived intelligence on the learning agent.

In a subsequent step 605, it is assumed that a chosen action ($a^*$) carries an EXT 102-105 or the AP 100 from state $s$ to s'. For this action, a reward r is determined as follows

$$r(s, a)[t + 1] = \hat{\mathcal{O}}[t + 1] + \omega\Phi(s', a) - \Phi(s, a) \tag{5}$$

wherein $\omega$ is a learning rate with a value in the range [0,1].

Next, in step 606 the Q-value is updated for the action ($a^*$) using its previous Q-value and the instantaneous reward r determined in step 605, as

$$Q(s, a)[t + 1] = Q(s, a)[t] + \omega\Delta(s, a) \tag{6}$$

wherein

$$\Delta(s, a) = r(s, a)[t + 1] + \{\varphi \max_{\forall a \in A} Q(s', a)[t + 1] - Q(s, a)[t]\} \tag{7}$$

$\varphi \in [0,1]$ is a constant called the discount factor.

Subsequently, in step 607 the exploration probability $\varepsilon(s)$ is defined as

$$\varepsilon(s)[t+1] = \psi(s)f(s,a,\sigma) + [1 - \psi(s)]\varepsilon(s)[t] \tag{8}$$

wherein

$$f(s,a,\sigma) = \frac{1 - e^{\frac{-|\omega\Delta(s,a)|}{\sigma}}}{1 + e^{\frac{-|\omega\Delta(s,a)|}{\sigma}}} \tag{9}$$

is updated. Herein, $\sigma \in [0,1]$ is a positive constant called inverse sensitivity, and $\psi(s) \in [0,1]$ quantifies an influence of the selected action on the state-dependent exploration probability. $\psi(s)$ may be set at $\frac{1}{|A(s)|}$.

Finally, in step 608 the output best action is ($a^*$).

The procedure illustrated in Fig. 6 of selecting a best action $a$ at a state $s$ may be represented by the policy $\pi(s|a)$:

$$\pi(s) = \begin{cases} \underset{a}{\arg\max}\, \Pr(s,a)\, ; \, \xi < \varepsilon(s) \\ \underset{a \in A}{\arg\max}\{Q(s,a) + \Phi(s,a)\}\, ; \, \text{otherwise} \end{cases} \tag{10}$$

In the Wi-Fi network, as illustrated by 110 and 220, the number of EXTs 102-105 may be represented by m, and the number of STAs 101, 106 by $u$, wherein m > 0, $u \geq 0$. The network may further be represented as a directed acyclic graph $G(V,E)$. V is the set of vertices or nodes representing the AP 100, EXTs 102-105 and the STAs 101 and 106 where for $v_i \in V$, $v_0$ denotes the AP 100, $\{v_1, ..., v_m\}$ denotes the EXTs 102-105 and $\{v_{m+1}, ..., v_{m+u}\}$ denotes the STAs 101 and 106. E is the set of edges that represent the possible links among them, in which $e_{ij} \in E$ denotes a link between $v_i$ and $v_j$ where the latter is the next hop with respect to $v_i$ to reach the AP 100. Each STA $v_i$ ($m < i \leq m + u$) in the network will either have a dire demand for high throughput or a dire demand for low delay. This information may be represented by a binary value associated with each STA $\kappa_i$, where $\kappa_i = 0$ if $v_i$ is throughput-sensitive and $\kappa_i = 1$ if $v_i$ is delay-sensitive. The number of throughput-sensitive STAs is $n_\tau$ and the number of delay-sensitive STAs is $n_\eta$ ($n_\tau + n_\eta = u$). This way, the performance coefficient $\hat{\mathcal{O}}$ may be represented more precisely as

$$\hat{\mathcal{O}}(\{\tau_i\}, \{\eta_i\}) = \frac{1}{n_\tau} \sum_{\substack{m < i \leq m+u \\ \kappa_i = 0}} \alpha \cdot \tau_i + \frac{1}{n_\eta} \sum_{\substack{m < i \leq m+u \\ \kappa_i = 1}} (1 - \alpha)\mu \cdot \eta_i^{-1} \tag{11}$$

wherein $\tau_i$ is an instantaneous measured value of throughput at $v_i$, $\eta_i$ is an instantaneous measured value of end-to-end delay at $v_i$ and $\mu$ is a normalization factor.

Further, two procedures are distinguished and illustrated by Fig. 4. A first procedure is an admittance 309 of a new STA 210 in the Wi-Fi network 220. The range 211 of the new STA 210 allows to be connected to EXT 104 through link 212 or to EXT 102 or EXT 105. A second procedure is a self-optimization 310 of the Wi-Fi network 110. Between both procedures 309 and 310, a conditional blocking 400 is present.

The procedure of admittance of a new STA 309 is further illustrated by steps in Fig. 7.

At the start 700, in a first step 701, when an admittance of a new STA 210 is blocked 400, it is waited until the admittance is unblocked. If the admittance is unblocked, in a next step it is sensed 702 if there is a new STA, such as STA 210 in Wi-Fi network 220. If there is a new STA sensed 702, in a next step 703, it is determined to which possible EXTs or to the AP the new STA may be associated to. This is done by keeping track of EXTs and/or the AP that receive a probe request, which is performed through active probing. If a set of EXTs and/or the AP which are possible candidates to connect to is C, a set of possible actions is A', so $|A'| = |C|$.

In a next step 704 a best action is selected according to the policy 502. At each $v_j \in C$, a signal-to-interference-plus-noise ratio $SINR$ relative to the STA, $SINR_i$, is calculated and stored in the learned knowledge 501. Each path $p_{k,j}$ of the set of all paths from a given EXT to the AP 100 ($P_j$) can be denoted as a set of ordered links $p_{k,j} = \{e_{a_0 a_1}, e_{a_1 a_2}, ..., e_{a_{i-1} a_i}, e_{a_i a_{i+1}}, ..., e_{a_{m-1} a_m}\}$ where $a_0 = j$ and $a_m = 0$.

Further, $ED_{k,j}$ is denoted as the Estimated Delay ($ED$) associated with path $p_{k,j} \in P_j$. Therefrom, $\eta_{min,j} = \min_{k} ED_{k,j}$ is determined, wherein this is the minimum $ED$ of all the paths from $v_j$ to the AP 100. To find the $ED$ of any path $p_{k,j}$, a procedure as described below is followed. First, a special control packet is periodically sent from the AP 100 to $v_j$ along $p_{k,j}$ with an initial timestamp ($t_0$) in its data payload. Second, it is assumed that this packet arrives at time $t_f$. Then the measured end-to-end delay is $t_f$ - $t_0$. The estimated end-to-end delay is defined at time $t$, $ED_{k,j}$ [$t$], through a moving average as

$$ED_{k,j}[t] = \rho(t_f - t_0) + (1 - \rho)\, ED_{k,j}[t - 1] \qquad (12)$$

wherein $\rho \in [0,1]$ is an adjustable constant that determines the dependence of the current delay measurement on previous measurements.

Next, $\eta_{exp,i}$ is determined by measuring a delay from the AP 100 to $v_i$ through the following expression

$$\eta_{exp,i} = \frac{S}{\tau_{exp,i}} \cdot \frac{1}{1 - Retr_j} + \eta_{min,j} \qquad (13)$$

to evaluate

$$\mathcal{O}(\eta_i = \eta_{exp,i}),$$

which is the total delay estimated to reach the STA $v_i$ from the AP 100 through the EXT $v_j$.

In expression (13), $S$ is a transmitted packet size and $Retr_j$ is a retransmission ratio for packets transmitted from node $v_j$ for STAs with an SINR similar to $SINR_i^{(j)}$. Further $\tau_{exp,i}$ is an expected throughput at $v_i$ after associating to EXT $v_j$, given by:

$$\tau_{exp,i} = \left(1 - u_{e_{ij}}^{(j)}\right) \cdot \{\min(\tau_{max,j}, \tau_M) - \tau_{curr}\} \cdot \log_2(1 + SINR_i^{(j)}) \qquad (14)$$

wherein $u_{e_{ij}}^{(j)}$ is an utilization of the channel associated with link $e_{ij}$ measured at $v_j$, $SINR_i^{(j)}$ is the SINR associated with that channel as measured at $v_j$ with respect to the signal strength of $v_i$'s signal, $\tau_M$ is the maximum estimated throughput expected at a single EXT associated to $v_j$, and $\tau_{curr}$ is a current measured throughput at the $v_j$ fronthaul interface.

Further, $\tau_{max,j}$ is a maximum throughput obtainable from any path $p_{k,j}$ from EXT $v_j$ to the AP 100 and expressed by:

$$\tau_{max,j} = \max_{k} MAT_{k,j} \qquad (15)$$

wherein, the Maximum Available Throughput ($MAT$) of path $p_{k,j}$, is defined as

$$MAT_{k,j} = \min_{0 \le a_i \le j-1} \{\max(\tau_{a_i a_{i+1}}) - \bar{\tau}_{a_i a_{i+1}}\} \qquad (16)$$

wherein $\max(\tau_{xy})$ is a maximum achievable throughput of link $e_{xy}$ and $\bar{\tau}_{xy}$ is a current measured throughput of link $e_{xy}$.

For a given link $e_{xy}$, $\bar{\tau}_{xy}$ is measured through the current data transfer across that link. To measure $\max(\tau_{xy})$, it is exploited how many times when that link is idle or unutilized. When there is no data transfer across that link, data

is transmitted from $v_x$ to $v_y$, or vice-versa, by gradually increasing the transmission rate and measuring the limiting saturation throughput at $v_y$.

Then, finally for step 704 the best action $a^* = \pi(s, A = A')$ from the policy $\pi$ according to expression (10), described in the learning procedure, is selected.

Subsequently, in step 705 the self-optimization procedure 310 is blocked 400, by temporarily blocking 706 a STA from all EXTs in C except $v_z$, thus from all EXTs in $C - \{v_z\}$. Thus, by blocking 706 all those EXTs, an association request is rejected from that STA until it finally gets associated.

Next, in step 707 $v_z$ accepts the association request from the STA when it eventually gets it and the association is complete.

In step 708 the STA routing path is assigned corresponding to the minimum delay for $v_z$ determined in step 704. Then, the Q-value for ($a^*$) is updated 709. Finally, the self-optimization procedure is unblocked 710.

For a TSC, $\tau_{max,j}$ is determined in step 704 and proceeded to determine a corresponding $v_j$. Next, in step 707 a routing path is assigned corresponding to the maximum throughput for $v_j$.

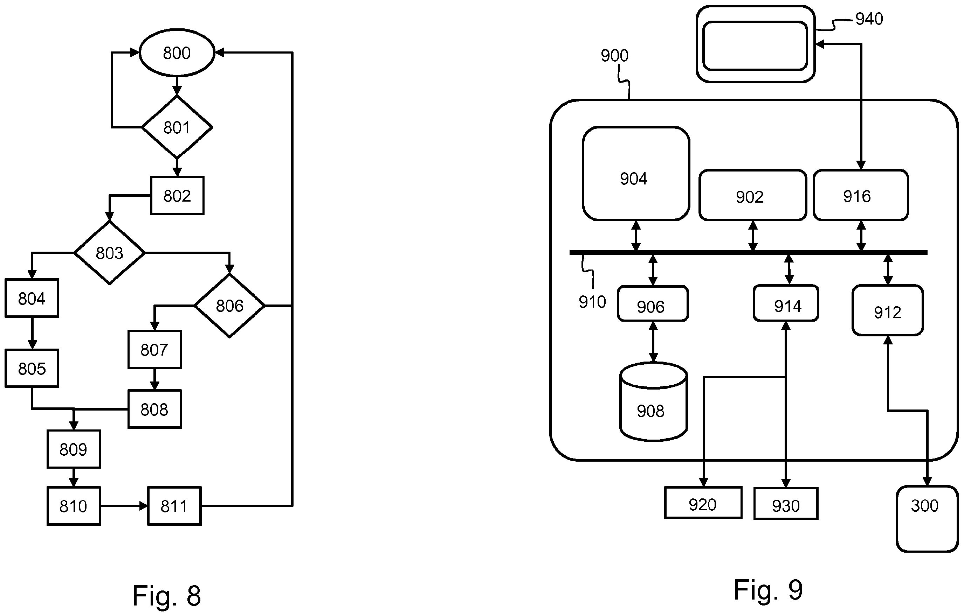

The self-optimization procedure 310 is further illustrated by Fig. 8. At the start 800, it is waited until the self-optimization procedure 310 is unblocked 801 to proceed to step 802. In step 802, the performance coefficient $\widehat{\mathcal{O}}$ is calculated, and $\mathcal{O}_{route}$ and $\mathcal{O}_{handoff}$ are determined.

For each $v_i \in U$ and for each k-th path from its EXT $v_j$ ($p_{k,j} \in P_j$),

$$\mathcal{O}_{route,i,k} = \begin{cases} \mathcal{O}(\tau_i = MAT_{j,k}); \kappa_i = 0 \\ \mathcal{O}(\eta_i = ED_{j,k}); \kappa_i = 1 \end{cases} \qquad (17)$$

is determined.

For each $v_i \in U$, and for each j-th EXT in its set of its candidate EXTs ($M_i$), an effective value of the objective function after handing off STA $v_i$ to EXT $v_j$, $\mathcal{O}_{eff,i,j}$ is determined. First, for each $v_i \in U$ the set of its candidate EXTs is determined and labelled as set $M_i$. Second, if $\kappa_i = 0$, $\tau_{max,j}$ is determined for each j-th candidate EXT $M_{i,j}$ by expression (15). Similarly, if $\kappa_i = 1$, $\eta_{min,j}$ is determined by expression $\eta_{min,j} = \min_k ED_{k,j}$. Third, for $\kappa_i = 0$, $\tau_{exp,i,j}$ is determined and

$$\mathcal{O}_{eff,i,j}(\tau_i = \tau_{exp,i,j})$$

is evaluated. For $\kappa_i = 1$, $\eta_{exp,i,j}$ is determined and

$$\mathcal{O}_{eff,i,j}(\eta_i = \eta_{exp,i,j})$$

is evaluated. Herein, the effective objective function is

$$\mathcal{O}_{eff}(\tau_i = \tau_{exp,i,j}) = \frac{t_{hf}}{T_{hf}} \cdot \mathcal{O}(U - \{v_i\}) + \frac{T_{hf} - t_{hf}}{T_{hf}} \cdot \mathcal{O}(\tau_i = \tau_{exp,i,j}) \qquad (18)$$

wherein $T_{hf}$ is the average time between handoffs in the network, and $t_{hf}$ average handoff time in the network.

The set of actions of assigning $v_i \in U$ to $p_{k,j}$ $(|A'_{route,i}| = |P_j|)$ is defined as $A'_{route,i}$, and

$$a^*_{route,i} = \pi(s, A = A'_{route,i})$$ is determined, and

$$\mathcal{O}_{route} = \max_{i} \mathcal{O}(a^*_{route,i}),$$

$$i_{route} = \arg\max_{i} \mathcal{O}(a^*_{route,i})$$

are set, wherein the policy $\pi$ is described by expression (10) in the learning policy 502.

The set of actions of handing off $v_i \in U$ to $M_{i,j}$ $\left(\left|A'_{handoff,i}\right| = |M_i|\right)$ is defined as $A'_{handoff,i}$, and $a^*_{handoff,i} = \pi(s, A = A'_{handoff,i})$ is determined, and

$$\mathcal{O}_{handoff} = \max_{i}$$

$$\mathcal{O}(a^*_{handoff,i}), \; i_{handoff} = \arg\max_{i}$$

are set.

Subsequently, in step 803 it is verified if

$$\mathcal{O}_{handoff} > \mathcal{O}_{route}$$

and

$$\mathcal{O}_{handoff} \; \vdots$$

If this is the case, the next step is 804, otherwise the next step is 806.

In step 804, new client admissions are blocked, and $a^*_{handoff,i}(i = i_{handoff})$, i.e. handoff STA $v_i(i = i_{handoff})$ to the corresponding EXT is executed 805.

In step 806, it is verified if

$$\mathcal{O}_{handoff} > \hat{\mathcal{O}}.$$

If this is the case, the next step is 807, otherwise, the procedure goes back to the start 800.

In step 807, new client admissions are blocked 807, and in step 808 $a^*_{route,i}(i = i_{route})$ i.e. assign STA $v_i(i = i_{handoff})$ to the corresponding route is executed.

If an action is executed, it is waited 809 until the action is completed. Next, in step 810 the Q-value is updated, and finally in step 811 admission of new clients is unblocked.

The self-optimization procedure 309 may be further illustrated by the algorithm as listed below:

**Input:**

Set of current throughput values and delay values: $\{\tau_i\}_{i=m+1}^{u}$ and $\{\eta_i\}_{i=m+1}^{u}$

**Output:** None

## Pseudocode:

1. While self-optimization is blocked, wait until it is unblocked.
2. Calculate $\mathcal{O}_{curr}$ using expression (11).
3. $\forall v_i \in U$ and $\forall p_{k,j} \in P_j$, find $\mathcal{O}_{route,i,k}$ using expression (17).
4. $\forall v_i \in U$, and $\forall M_{ij}$, find $\mathcal{O}_{eff,i,j}$ as outlined in expression (18).
5. **define** $A'_{route,i}$ = Set of actions of assigning $v_i \in U$ to $p_{k,j}$.
6. **define** $A'_{handoff,i}$ = Set of actions of handing off $v_i \in U$ to $M_{i,j}$.
7. **set** $a^*_{route,i} = \pi(s, A = A'_{route,i})$, **set** $\mathcal{O}_{route} = \max_i \mathcal{O}(a^*_{route,i})$, **set** $i_{route} = \arg\max_i \mathcal{O}(a^*_{route,i})$.
8. **set** $a^*_{handoff,i} = \pi(s, A = A'_{handoff,i})$, **set** $\mathcal{O}_{handoff} = \max_i \mathcal{O}(a^*_{handoff,i})$, **set** $i_{handoff} = \arg\max_i \mathcal{O}(a^*_{handoff,i})$.
9. **if** $\mathcal{O}_{handoff} > \mathcal{O}_{route}$ AND $\mathcal{O}_{handoff} \geq (1 + f_h) \cdot \hat{\mathcal{O}}$ **then**

   10.    $a^* = \text{Handoff } v_{i_{handoff}}$ to selected AP
   11. **else** if $\mathcal{O}_{route} > \hat{\mathcal{O}}$ **then**
   12.    $a^* = \text{Change route of } v_{i_{route}}$ to corresponding path
   13. **else**
   14.    $a^* = NULL$
   15. **end if**
   16. **if** $a^* \neq NULL$
   17.    Block new client admissions
   18.    Execute $a^*$ and wait until it completes
   19.    Update Q-value corresponding to $a^*$.
   20.    Unblock new client admissions
   21. **end if**
   22. Go to 1.

The admittance of new STAs procedure 309 may be further illustrated by the algorithm as listed below:

**Input:**

Set of current throughput values and delay values: $\{\tau_i\}_{i=m+1}^{u}$ and $\{\eta_i\}_{i=m+1}^{u}$

**Output:** None

**Pseudocode:**

1. While new client admission is blocked, wait until it is unblocked.
2. Sense for new client.
3. **if** new client is not sensed **then**
4.   Go to 1.
5. **end if**
6. Listen to probe requests from STA and find set of candidate EXTs, $C$.
7. $\forall v_i \in C$, calculate the $SINR$ relative to the STA, $SINR_i$.
8. $\forall v_i \in C$, **set** $\eta_i' = \min_k p_{k,j}$ where $p_{k,j} \in P_i$.
9. Find $\eta_{exp,i}$ using expression (13) and evaluate $\mathcal{O}(\eta_i = \eta_{exp,i})$.
10. $a^* = \pi(s, A = A')$, **define** $v_z$ as the EXT corresponding to $a^*$.
11. Block self-optimization.
12. Temporarily block STA from all EXTs in $C - \{v_z\}$.
13. Wait until association is complete.
14. Assign STA the route corresponding to minimum delay for $v_z$.
15. Unblock self-optimization.
16. Go to 1.

Fig. 9 shows a suitable computing system 900 according to an example embodiment. Computing system 900 comprises means for performing the steps according to the above example embodiments. Computing system 900 may therefore be used as suitable implementation of network controller 300. Computing system 900 may in general be formed as a suitable general-purpose computer and comprise a bus 910, a processor 902, a local memory 904, one or more optional input interfaces 914, one or more optional output interfaces 916, a communication interface 912, storage element interface 906 and one or more storage elements 908. Bus 910 may comprise one or more conductors that permit communication among the components of the computing system 900. Processor 902 may include any type of conventional processor or microprocessor that interprets and executes programming instructions. Local memory 904 may include a random-access memory (RAM) or another type of dynamic storage device that stores information and instructions for execution by processor 902 and/or a read only memory (ROM) or another type of static storage device that stores static information and instructions for use by processor 902. Input interface 914 may comprise one or more conventional mechanisms that permit an operator to input information to the computing device 900, such as a keyboard 920, a mouse 930, a pen, voice recognition and/or biometric mechanisms, etc. Output interface 916 may comprise one or more conventional mechanisms that output information to the operator, such as a display 940, etc. Communication interface 912 may comprise any transceiver-like mechanism such as for example one or more Ethernet interfaces that enables computing system 900 to communicate with other devices and/or systems. The communication interface 912 of computing system 900 may be connected to such another computing system by means of a local area network (LAN) or a wide area network (WAN) such as for example the internet. Storage element interface 906 may comprise a storage interface such as for example a Serial Advanced Technology Attachment (SATA) interface or a Small Computer System Interface (SCSI) for connecting bus 910 to one or more storage elements 908, such as one or more local disks, for example SATA disk drives, and control the reading and writing of data to and/or from these storage elements 908. Although the storage elements 908 above is described as a local disk, in general any other suitable computer-readable media such as a removable magnetic disk, optical storage media such as a CD or DVD, -ROM disk, solid state drives, flash memory cards, ... may be used.

Although the present invention has been illustrated by reference to specific embodiments, it will be apparent to those skilled in the art that the invention is not limited to the details of the foregoing example embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A network controller (300) comprising means for performing:

   - monitoring (301) routing paths (120-122, 123-124) wherein data-packets are exchanged between an access point, AP (100), and respective associated devices, STAs (101, 106), in a Wi-Fi network (110) comprising at least one range extender, EXT (102-105); and
   - classifying (302) the STAs (101, 106) as a delay-sensitive associated device, DSC (101), or a throughput-sensitive associated device, TSC (106);

   **characterized in that**, the network controller further comprises means for performing:

   - calculating (303) an average delay between the DSCs (101) and the AP (100), and an average throughput between the TSCs (106) and the AP (100);
   - weighting (304) the average delay with the average throughput, thereby obtaining a performance coefficient; and
   - optimizing (305) the performance coefficient by altering (306) the routing paths (200-202, 203).

2. The network controller (300) according to claim 1 wherein the altering (306) further comprises reassociating (307) the STAs (101, 106) to an EXT (102-105) or to the AP (100).

3. The network controller (300) according to any one of the preceding claims wherein the altering (306) further comprises rerouting (308) the routing paths (120-122, 123-124, 200-202, 203).

4. The network controller (300) according to any one of the preceding claims wherein the weighting (304) further comprises giving priority (309) to the DSCs (101) or to the TSCs (106).

5. The network controller (300) according to any one of the preceding claims wherein the means are further configured to perform:

   - selecting (310) an EXT (102-105) or the AP (100) when an additional STA (210) requests admittance to the Wi-Fi network (110);
   - admitting (311) the additional STA (210) to the Wi-Fi network (110) through the selected EXT (104) or the AP when the selected EXT (104) or the AP results in a routing path optimizing the performance coefficient.

6. The network controller (300) according to any one of the preceding claims, wherein the optimizing (305) further comprises optimizing the Wi-Fi network (110) by performing an advised reinforcement learning algorithm.

7. The network controller (300) according to claim 6 wherein the performing of the advised reinforcement learning algorithm comprises performing a Q-learning algorithm performing:

   - determining for a STA candidate EXTs (102-105) for associating the STA to the Wi-Fi network (110);
   - determining a reward (506) when the STA would be reassociated to one of the candidate EXTs (102-105) or the AP (100), and a Q-value of the Q-learning algorithm associated with the reward;

   and when the STA is reassociated:

   - updating the Q-value based on the reward.

8. The network controller (300) according to any one of the preceding claims wherein the means comprises at least one processor (902); and at least one memory (904) including computer program code, the at least one memory and computer program code configured to, with the at least one processor, cause the performance of the networking device.

9.  A method comprising:

    - monitoring routing paths (120-122, 123-124) wherein data-packets are exchanged between an access point, AP (100), and respective associated devices, STAs (101, 106), in a Wi-Fi network (110) comprising at least one range extender, EXT (102-105); and
    - classifying the STAs (101, 106) as a delay-sensitive associated device, DSC (101), or a throughput-sensitive associated device, TSC (106);

    **characterized in** the method further comprising:

    - calculating an average delay between the DSCs (101) and the AP (100), and an average throughput between the TSCs (106) and the AP (100);
    - weighting the average delay with the average throughput, thereby obtaining a performance coefficient; and
    - optimizing the performance coefficient by altering (306) the routing paths (200-202, 203).

10. The method according to claim 9 wherein the altering further comprises reassociating the STAs (101, 106) to an EXT (102-105) or to the AP (100).

11. The method according to any one of the claims 9 to 10 wherein altering further comprises rerouting the routing paths.

12. A computer program product comprising computer-executable instructions for performing the following steps when the program is run on a computer:

    - monitoring routing paths (120-122, 123-124) wherein data-packets are exchanged between an access point, AP (100), and respective associated devices, STAs (101, 106), in a Wi-Fi network (110) comprising at least one range extender, EXT (102-105); and
    - classifying the STAs (101, 106) as a delay-sensitive associated device, DSC (101), or a throughput-sensitive associated device, TSC (106);

    **characterized in** the computer program product further comprising computer-executable instructions for performing the following steps when the program is run on a computer:

    - calculating an average delay between the DSCs (101) and the AP (100), and an average throughput between the TSCs (106) and the AP (100);
    - weighting the average delay with the average throughput, thereby obtaining a performance coefficient; and
    - optimizing the performance coefficient by altering (306) the routing paths (200-202, 203).

13. A computer readable storage medium comprising computer-executable instructions for performing the following steps when the program is run on a computer:

    - monitoring routing paths (120-122, 123-124) wherein data-packets are exchanged between an access point, AP (100), and respective associated devices, STAs (101, 106), in a Wi-Fi network (110) comprising at least one range extender, EXT (102-105); and
    - classifying the STAs (101, 106) as a delay-sensitive associated device, DSC (101), or a throughput-sensitive associated device, TSC (106);

    **characterized in** further comprising computer-executable instructions for performing the following steps when the program is run on a computer:

    - calculating an average delay between the DSCs (101) and the AP (100), and an average throughput between the TSCs (106) and the AP (100);
    - weighting the average delay with the average throughput, thereby obtaining a performance coefficient; and
    - optimizing the performance coefficient by altering (306) the routing paths (200-202, 203).

**Patentansprüche**

1. Netzwerksteuerung (300), die Mittel zum Durchführen von Folgendem umfasst:

   - Überwachen (301) von Routingpfaden (120-122, 123-124), wobei zwischen einem Zugangspunkt, AP (100), und jeweiligen verknüpften Vorrichtungen, STAs (101, 106) in einem Wi-Fi-Netzwerk (110), das mindestens eine Bereichserweiterung, EXT (102-105) umfasst, Datenpakete ausgetauscht werden; und
   - Klassifizieren (302) der STAs (101, 106) als eine verzögerungsempfindliche verknüpfte Vorrichtung, DSC (101), oder eine durchsatzempfindliche verknüpfte Vorrichtung, TSC (106) ;

   **dadurch gekennzeichnet, dass** die Netzwerksteuerung ferner Mittel zum Durchführen von Folgendem umfasst:

   - Berechnen (303) einer durchschnittlichen Verzögerung zwischen den DSCs (101) und dem AP (100) und eines durchschnittlichen Durchsatzes zwischen den TSCs (106) und dem AP (100);
   - Gewichten (304) der durchschnittlichen Verzögerung mit dem durchschnittlichen Durchsatz, dadurch Erhalten eines Leistungskoeffizienten; und
   - Optimieren (305) des Leistungskoeffizienten durch Ändern (306) der Routingpfade (200-202, 203).

2. Netzwerksteuerung (300) nach Anspruch 1, wobei das Ändern (306) ferner das erneute Verknüpfen (307) der STAs (101, 106) mit einer EXT (102-105) oder mit dem AP (100) umfasst.

3. Netzwerksteuerung (300) nach einem der vorhergehenden Ansprüche, wobei das Ändern (306) ferner das Umleiten (308) der Routingpfade (120-122, 123-124, 200-202, 203) umfasst.

4. Netzwerksteuerung (300) nach einem der vorhergehenden Ansprüche, wobei das Gewichten (304) ferner das Priorisieren (309) der DSCs (101) oder der TSCs (106) umfasst.

5. Netzwerksteuerung (300) nach einem der vorhergehenden Ansprüche, wobei die Mittel ferner dazu ausgelegt sind, Folgendes durchzuführen:

   - Auswählen (310) einer EXT (102-105) oder des AP (100), wenn eine zusätzliche STA (210) Einlass in das Wi-Fi-Netzwerk (110) anfordert;
   - Einlassen (311) der zusätzlichen STA (210) in das Wi-Fi-Netzwerk (110) über die ausgewählte EXT (104) oder den AP, wenn die ausgewählte EXT (104) oder der AP darin resultiert, dass ein Routingpfad den Leistungskoeffizienten optimiert.

6. Netzwerksteuerung (300) nach einem der vorhergehenden Ansprüche, wobei das Optimieren (305) ferner das Optimieren des Wi-Fi-Netzwerks (110) durch Durchführen eines empfohlenen Algorithmus für bestärkendes Lernen umfasst.

7. Netzwerksteuerung (300) nach Anspruch 6, wobei das Durchführen des empfohlenen Algorithmus für bestärkendes Lernen das Durchführen eines Q-Lernalgorithmus, der Folgendes durchführt, umfasst:

   - Bestimmen von EXT(102-105)-Kandidaten für eine STA zum Verknüpfen der STA mit dem Wi-Fi-Netzwerk (110);
   - Bestimmen einer Belohnung (506), wenn die STA mit einem der EXT(102-105)-Kandidaten oder dem AP (100) erneut verknüpft würde, und eines Q-Wertes des Q-Lernalgorithmus, der mit der Belohnung verknüpft ist;

   und wenn die STA erneut verknüpft wird:

   - Aktualisieren des Q-Wertes auf Basis der Belohnung.

8. Netzwerksteuerung (300) nach einem der vorhergehenden Ansprüche, wobei die Mittel mindestens einen Prozessor (902) und mindestens einen Speicher (904), der einen Computerprogrammcode beinhaltet, umfassen, wobei der mindestens eine Speicher und der Computerprogrammcode mit dem mindestens einen Prozessor dazu ausgelegt sind, die Leistung der Vernetzungsvorrichtung zu veranlassen.

9. Verfahren, das Folgendes umfasst:

- Überwachen von Routingpfaden (120-122, 123-124), wobei zwischen einem Zugangspunkt, AP (100), und jeweiligen verknüpften Vorrichtungen, STAs (101, 106) in einem Wi-Fi-Netzwerk (110), das mindestens eine Bereichserweiterung, EXT (102-105) umfasst, Datenpakete ausgetauscht werden; und
- Klassifizieren der STAs (101, 106) als eine verzögerungsempfindliche verknüpfte Vorrichtung, DSC (101), oder eine durchsatzempfindliche verknüpfte Vorrichtung, TSC (106) ;

**dadurch gekennzeichnet, dass** das Verfahren ferner Folgendes umfasst:

- Berechnen einer durchschnittlichen Verzögerung zwischen den DSCs (101) und dem AP (100) und eines durchschnittlichen Durchsatzes zwischen den TSCs (106) und dem AP (100);
- Gewichten der durchschnittlichen Verzögerung mit dem durchschnittlichen Durchsatz, dadurch Erhalten eines Leistungskoeffizienten; und
- Optimieren des Leistungskoeffizienten durch Ändern (306) der Routingpfade (200-202, 203).

10. Verfahren nach Anspruch 9, wobei das Ändern ferner das erneute Verknüpfen der STAs (101, 106) mit einer EXT (102-105) oder mit dem AP (100) umfasst.

11. Verfahren nach einem der Ansprüche 9 bis 10, wobei das Ändern ferner das Umleiten der Routingpfade umfasst.

12. Computerprogrammprodukt, das computerausführbare Anweisungen zum Durchführen der folgenden Schritte, wenn das Programm auf einem Computer ausgeführt wird, umfasst:

- Überwachen von Routingpfaden (120-122, 123-124), wobei zwischen einem Zugangspunkt, AP (100), und jeweiligen verknüpften Vorrichtungen, STAs (101, 106) in einem Wi-Fi-Netzwerk (110), das mindestens eine Bereichserweiterung, EXT (102-105) umfasst, Datenpakete ausgetauscht werden; und
- Klassifizieren der STAs (101, 106) als eine verzögerungsempfindliche verknüpfte Vorrichtung, DSC (101), oder eine durchsatzempfindliche verknüpfte Vorrichtung, TSC (106) ;

**dadurch gekennzeichnet, dass** das Computerprogrammprodukt ferner computerausführbare Anweisungen zum Durchführen der folgenden Schritte, wenn das Programm auf einem Computer ausgeführt wird, umfasst:

- Berechnen einer durchschnittlichen Verzögerung zwischen den DSCs (101) und dem AP (100) und eines durchschnittlichen Durchsatzes zwischen den TSCs (106) und dem AP (100);
- Gewichten der durchschnittlichen Verzögerung mit dem durchschnittlichen Durchsatz, dadurch Erhalten eines Leistungskoeffizienten; und
- Optimieren des Leistungskoeffizienten durch Ändern (306) der Routingpfade (200-202, 203).

13. Computerlesbares Speichermedium, das computerausführbare Anweisungen zum Durchführen der folgenden Schritte, wenn das Programm auf einem Computer ausgeführt wird, umfasst:

- Überwachen von Routingpfaden (120-122, 123-124), wobei zwischen einem Zugangspunkt, AP (100), und jeweiligen verknüpften Vorrichtungen, STAs (101, 106) in einem Wi-Fi-Netzwerk (110), das mindestens eine Bereichserweiterung, EXT (102-105) umfasst, Datenpakete ausgetauscht werden; und
- Klassifizieren der STAs (101, 106) als eine verzögerungsempfindliche verknüpfte Vorrichtung, DSC (101), oder eine durchsatzempfindliche verknüpfte Vorrichtung, TSC (106) ;

**dadurch gekennzeichnet, dass** es ferner computerausführbare Anweisungen zum Durchführen der folgenden Schritte, wenn das Programm auf einem Computer ausgeführt wird, umfasst:

- Berechnen einer durchschnittlichen Verzögerung zwischen den DSCs (101) und dem AP (100) und eines durchschnittlichen Durchsatzes zwischen den TSCs (106) und dem AP (100);
- Gewichten der durchschnittlichen Verzögerung mit dem durchschnittlichen Durchsatz, dadurch Erhalten eines Leistungskoeffizienten; und
- Optimieren des Leistungskoeffizienten durch Ändern (306) der Routingpfade (200-202, 203).

**Revendications**

1. Contrôleur de réseau (300) comprenant des moyens pour exécuter :

   - la surveillance (301) de chemins de routage (120-122, 123-124) dans lesquels des paquets de données sont échangés entre un point d'accès, AP (100), et des dispositifs associés respectifs, STA (101, 106), dans un réseau Wi-Fi (110) comprenant au moins un prolongateur de portée, EXT (102-105) ; et
   - la classification (302) des STA (101, 106) en tant que dispositif associé sensible au retard, DSC (101), ou dispositif associé sensible au débit, TSC (106) ;

   **caractérisé en ce que**, le contrôleur de réseau comprend en outre des moyens pour exécuter :

   - le calcul (303) d'un retard moyen entre les DSC (101) et l'AP (100), et d'un débit moyen entre les TSC (106) et l'AP (100) ;
   - la pondération (304) du retard moyen avec le débit moyen, obtenant ainsi un coefficient de performance ; et
   - l'optimisation (305) du coefficient de performance en modifiant (306) les chemins de routage (200-202, 203).

2. Contrôleur de réseau (300) selon la revendication 1, dans lequel la modification (306) comprend en outre la réassociation (307) des STA (101, 106) à un EXT (102-105) ou à l'AP (100) .

3. Contrôleur de réseau (300) selon l'une quelconque des revendications précédentes, dans lequel la modification (306) comprend en outre le reroutage (308) des chemins de routage (120-122, 123-124, 200-202, 203).

4. Contrôleur de réseau (300) selon l'une quelconque des revendications précédentes, dans lequel la pondération (304) comprend en outre le fait de donner la priorité (309) aux DSC (101) ou aux TSC (106).

5. Contrôleur de réseau (300) selon l'une quelconque des revendications précédentes, dans lequel les moyens sont en outre configurés pour exécuter :

   - la sélection (310) d'un EXT (102-105) ou de l'AP (100) lorsqu'un STA supplémentaire (210) demande l'admission au réseau Wi-Fi (110) ;
   - l'admission (311) du STA supplémentaire (210) au réseau Wi-Fi (110) par l'intermédiaire de l'EXT (104) ou de l'AP sélectionné lorsque l'EXT (104) ou l'AP sélectionné aboutit à un chemin de routage optimisant le coefficient de performance.

6. Contrôleur de réseau (300) selon l'une quelconque des revendications précédentes, dans lequel l'optimisation (305) comprend en outre l'optimisation du réseau Wi-Fi (110) en exécutant un algorithme d'apprentissage par renforcement conseillé.

7. Contrôleur de réseau (300) selon la revendication 6, dans lequel l'exécution de l'algorithme d'apprentissage par renforcement conseillé comprend l'exécution d'un algorithme d'apprentissage Q exécutant :

   - la détermination pour un STA d'EXT candidats (102-105) pour associer le STA au réseau Wi-Fi (110) ;
   - la détermination d'une récompense (506) lorsque le STA serait réassocié à l'un des EXT candidats (102-105) ou à l'AP (100), et d'une valeur Q de l'algorithme d'apprentissage Q associé à la récompense ;

   et lorsque le STA est réassocié :

   - la mise à jour de la valeur Q sur la base de la récompense.

8. Contrôleur de réseau (300) selon l'une quelconque des revendications précédentes, dans lequel les moyens comprennent au moins un processeur (902) ; et au moins une mémoire (904) incluant un code de programme informatique, la au moins une mémoire et le code de programme informatique étant configurés pour, avec le au moins un processeur, provoquer l'exécution du dispositif de mise en réseau.

9. Procédé comprenant :

   - la surveillance de chemins de routage (120-122, 123-124) dans lesquels des paquets de données sont échangés entre un point d'accès, AP (100), et des dispositifs associés respectifs, STA (101, 106), dans un réseau Wi-Fi (110) comprenant au moins un prolongateur de portée, EXT (102-105) ; et
- la classification des STA (101, 106) en tant que dispositif associé sensible au retard, DSC (101), ou dispositif associé sensible au débit, TSC (106) ;

**caractérisé par** le procédé comprenant en outre :

- le calcul d'un retard moyen entre les DSC (101) et l'AP (100), et d'un débit moyen entre les TSC (106) et l'AP (100) ;
- la pondération du retard moyen avec le débit moyen, obtenant ainsi un coefficient de performance ; et
- l'optimisation du coefficient de performance en modifiant (306) les chemins de routage (200-202, 203).

10. Procédé selon la revendication 9, dans lequel la modification comprend en outre la réassociation des STA (101, 106) à un EXT (102-105) ou à l'AP (100).

11. Procédé selon l'une quelconque des revendications 9 à 10, dans lequel la modification comprend en outre le reroutage des chemins de routage.

12. Produit de programme informatique comprenant des instructions exécutables par ordinateur pour exécuter les étapes suivantes lorsque le programme est exécuté sur un ordinateur :

- la surveillance de chemins de routage (120-122, 123-124) dans lesquels des paquets de données sont échangés entre un point d'accès, AP (100), et des dispositifs associés respectifs, STA (101, 106), dans un réseau Wi-Fi (110) comprenant au moins un prolongateur de portée, EXT (102-105) ; et
- la classification des STA (101, 106) en tant que dispositif associé sensible au retard, DSC (101), ou dispositif associé sensible au débit, TSC (106) ;

**caractérisé par** le produit de programme informatique comprenant en outre des instructions exécutables par ordinateur pour exécuter les étapes suivantes lorsque le programme est exécuté sur un ordinateur :

- le calcul d'un retard moyen entre les DSC (101) et l'AP (100), et d'un débit moyen entre les TSC (106) et l'AP (100) ;
- la pondération du retard moyen avec le débit moyen, obtenant ainsi un coefficient de performance ; et
- l'optimisation du coefficient de performance en modifiant (306) les chemins de routage (200-202, 203).

13. Support de stockage lisible par ordinateur comprenant des instructions exécutables par ordinateur pour exécuter les étapes suivantes lorsque le programme est exécuté sur un ordinateur :

- la surveillance de chemins de routage (120-122, 123-124) dans lesquels des paquets de données sont échangés entre un point d'accès, AP (100), et des dispositifs associés respectifs, STA (101, 106), dans un réseau Wi-Fi (110) comprenant au moins un prolongateur de portée, EXT (102-105) ; et
- la classification des STA (101, 106) en tant que dispositif associé sensible au retard, DSC (101), ou dispositif associé sensible au débit, TSC (106) ;

**caractérisé par** le fait de comprendre en outre des instructions exécutables par ordinateur pour exécuter les étapes suivantes lorsque le programme est exécuté sur un ordinateur :

- le calcul d'un retard moyen entre les DSC (101) et l'AP (100), et d'un débit moyen entre les TSC (106) et l'AP (100) ;
- la pondération du retard moyen avec le débit moyen, obtenant ainsi un coefficient de performance ; et
- l'optimisation du coefficient de performance en modifiant (306) les chemins de routage (200-202, 203).

Fig. 1

Fig. 2

EP 3 595 362 B1

Fig. 3

EP 3 595 362 B1

Fig. 4

Fig. 5

EP 3 595 362 B1

Fig. 7

Fig. 6

Fig. 8

Fig. 9

EP 3 595 362 B1

**EP 3 595 362 B1**

**Patent documents cited in the description**

- US 20180102961 A1
- US 20160088521 A1